Europäisches Patentamt

European Patent Office

Office européen des brevets

(19)

(11) Numéro de publication : **0 407 266 B1**

# FASCICULE DE BREVET EUROPEEN

(12)

(45) Date de publication du fascicule du brevet :
25.05.94 Bulletin 94/21

(51) Int. Cl.⁵ : **F16L 57/00, F16L 59/14**

(21) Numéro de dépôt : **90401846.2**

(22) Date de dépôt : **27.06.90**

(54) **Revêtement de protection contre la chaleur et le feu pour tuyaux et structures analogues de forme allongée.**

(30) Priorité : **05.07.89 FR 8909034**

(43) Date de publication de la demande :
**09.01.91 Bulletin 91/02**

(45) Mention de la délivrance du brevet :
**25.05.94 Bulletin 94/21**

(84) Etats contractants désignés :
**BE DE ES GB IT LU NL SE**

(56) Documents cités :
**WO-A-88/05885
GB-A- 2 184 512
US-A- 4 259 989
US-A- 4 452 279**

(73) Titulaire : **HUTCHINSON
2 rue Balzac
F-75008 Paris (FR)**

(72) Inventeur : **Blin, Philippe
La Maquinière
F-37260 Monts (FR)**

(74) Mandataire : **Orès, Bernard et al
Cabinet ORES
6, Avenue de Messine
F-75008 Paris (FR)**

EP 0 407 266 B1

Jouve, 18, rue Saint-Denis, 75001 PARIS

## Description

La présente invention est relative à un revêtement de protection contre l'action de la chaleur et du feu, plus particulièrement destiné à des tuyaux et à des produits analogues de forme allongée, tels que des câbles électriques ou optiques ainsi que des canalisations pneumatiques ou hydrauliques, etc.

Pour ces tuyaux, câbles et canalisations, existe le problème de conserver la fonction pour laquelle ils ont été conçus (à savoir, transport de fluides sous pression, d'énergie électrique, d'informations, etc) en présence de feu et à des températures relativement élevées, de l'ordre de 850°C environ, et ce pendant un temps donné pendant lequel on va assurer un régime de secours.

Parmi les solutions existantes, on connaît celle qui est décrite dans la Demande de Brevet FR-A- 2 591 715 et qui est représentée par une gaine de protection comportant :
- un bandage de plusieurs couches en un matériau non organique,
- un enroulement serré disposé sur ce bandage et réalisé en fil ou bande, en un matériau résistant à la température,
- une gaine entourant cet enroulement et faisant manchette de compression, elle aussi constituée par un élément résistant à la chaleur et/ou au feu.

De façon plus précise, le matériau inorganique précité, est constitué par du mica qui est supporté par la face interne d'une bande de soie de verre, de façon à en faciliter l'application autour du tuyau ; l'enroulement est constitué par des bandes de soie de verre recouvertes d'aluminium sur leur face extérieure, de façon à réfléchir la chaleur ; la gaine faisant manchette de compression est constituée par un tissage en un matériau résistant à la chaleur et/ou au feu. Entre l'enroulement et la manchette de compression, on peut également disposer une gaine en céramique de répartition de la chaleur, réalisée à partir de fils de fibres de céramique, éventuellement revêtus de métal. Une enveloppe supplémentaire, notamment réalisée en caoutchouc de silicone ignifuge et ayant une haute résistance à la déchirure, peut être appliquée à l'extérieur de la structure stratifiée de protection du tuyau évoquée plus haut.

WO-88 05885 décrit une barrière de protection contre le feu d'une conduite tubulaire comportant une couche en matériau léger isolant thermiquement, par exemple, en laine minérale, entourée par un matériau résistant aux hautes températures.

Toutefois, la solution connue de l'Art antérieur, que l'on vient de rappeler, comme d'autres solutions existantes d'ailleurs, présente l'inconvénient de modifier la souplesse propre statique du tuyau ou, en général, de la structure allongée que l'on veut ainsi protéger. De plus, ces solutions augmentent la raideur dynamique et, par cela même, la génération de bruits face aux vibrations, ce qui peut être gênant dans certaines applications, notamment concernant les sous-marins.

US-4 259 989 décrit une conduite tubulaire comportant une barrière contre le feu telle que définie dans la première partie de la revendication 1.

La présente invention s'est donc donné pour but de pourvoir à un revêtement pour structure allongée, telle que des tuyaux, des câbles électriques ou optiques, des canalisations pneumatiques ou hydrauliques, qui répond mieux aux nécessités de la pratique que les revêtements visant au même but antérieurement connus, notamment en ce que, tout en assurant le fonctionnement de ces structures pendant un temps donné nécessaire pour le maintien d'un régime de secours acceptable, il permet de conserver la souplesse propre, statique des structures à protéger et d'assurer une faible variation de raideur dynamique avec faible production de bruit, et ce dans des conditions aggravées de température, notamment en cas d'incendie, pendant lesquelles peuvent se dévolopper des températures relativement élevées, de l'ordre d'environ 850°C et même plus, tout en ne dégageant pas de produits toxiques, notamment de type halogène, phosphoré, etc...

La présente invention a pour objet un revêtement de protection contre l'incendie pour structure allongée, telle que tuyaux, câbles électriques ou optiques, canalisations pneumatiques ou hydrauliques, tel que défini dans la revendication 1.

En même temps, cette solution confère une souplesse exceptionnelle au revêtement, de façon telle que son application sur une structure allongée souple à protéger ne modifie pas la souplesse de celle-ci dans son ensemble, et ne modifie que très légèrement la raideur dynamique.

Selon un mode de réalisation avantageux du revêtement conforme à l'invention, chaque couche faisant barrière pour l'air est constituée par un film à base d'élastomère de silicone ignifugé, dont est enduite la surface externe des couches de la première pluralité.

Selon une variante de réalisation préférée de ce mode de réalisation, chaque couche faisant barrière pour l'air est constituée par une couche bi-composite dont la couche la plus interne est réalisée à base de silice et alumine, alors que la couche la plus externe est réalisée en un film à base d'élastomère de silicone ignifugé.

Selon une autre variante de réalisation préférée, les couches bi-composites précitées constituent les barrières internes, alors que la barrière externe est constituée par un film à base d'élastomère de silicone

2

ignifugé.

Selon encore une autre variante de réalisation avantageuse, les barrières internes pour l'air sont uniquement réalisées à base de silice et alumine, alors que la barrière externe est réalisée en un film à base d'élastomère de silicone ignifugé.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés dans lesquels :
- la figure 1 est une vue en perspective, avec arrachements, d'un mode de réalisation du revêtement selon l'invention qui correspond à une structure minimale de celui-ci ;
- la figure 2 est également une vue en perspective, avec arrachements, d'un mode de réalisation du revêtement selon l'invention qui correspond à une structure surdimensionnée par rapport à la structure minimale illustrée à la figure 1.

Il doit être bien entendu, toutefois, que ces dessins et les parties descriptives correspondantes, sont donnés uniquement à titre d'illustration de l'objet de l'invention, dont ils ne constituent en aucune manière une limitation.

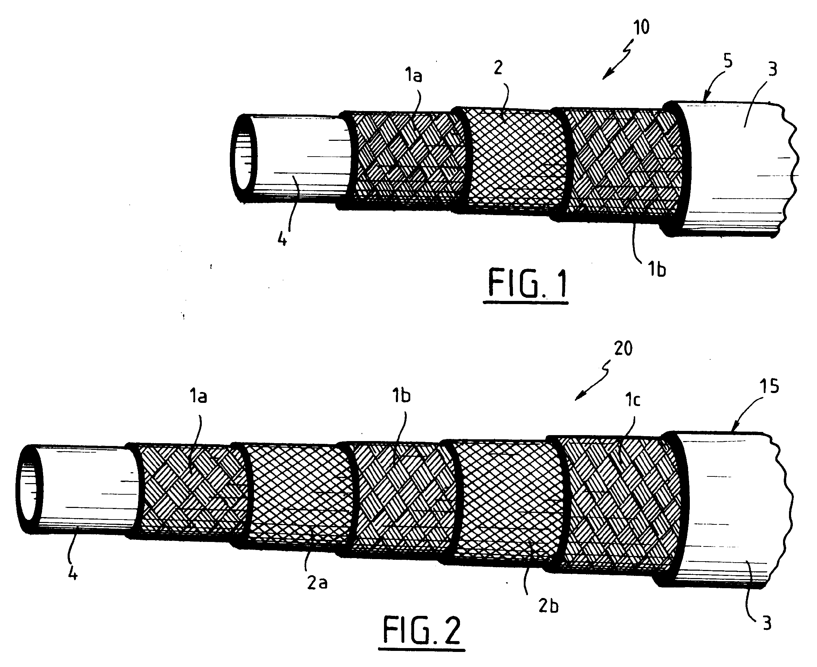

La Demanderesse a réalisé deux prototypes dont l'un correspond à une structure minimale, illustrée à la figure 1, alors que l'autre correspond à une structure surdimensionnée par rapport à celle-ci et illustrée à la figure 2, l'une et l'autre ayant donné satisfaction, comme le montrent les résultats des essais qui sont évoqués plus loin.

Le premier prototype 10 comprend un revêtement 5 constitué de deux tresses de céramique 1a, 1b encadrant une couche réfractaire 2 à base de silice et alumine, le tout étant revêtu d'un film 3 à base d'élastomère de silicone rendu ignifuge par incorporation d'une charge minérale, de préférence du type ne contenant pas de composants halogènes phosphorés, etc... de façon à éviter le dégagement de produits toxiques lorsqu'ils sont soumis à l'action de la chaleur et/ou du feu.

Ce revêtement est appliqué autour d'un tuyau flexible 4. Chacune des tresses de céramique 1a, 1b est un excellent exemple de couche emprisonnant de l'air (elles sont en particulier du type commercialisé par la Société FERLAM), alors que la couche interne 2 à base de silice et alumine (par exemple du type commercialisé sous le nom de marque de fabrique "REFRATEX" par la Société BROCHER, qui en fait des rouleaux) et la couche externe 3 à base d'élastomère de silicone (notamment commercialisé par exemple par DOW CORNING, GENERAL ELECTRIC ou RHONE-POULENC) constituent des barrières efficaces pour l'air emprisonné dans les tresses de céramique.

Pour un tuyau 4 ayant un diamètre interne de 20 mm et un diamètre extérieur de 32 mm, on a obtenu un diamètre extérieur total de 52 mm comprenant le revêtement précité. Le tuyau ainsi revêtu a été soumis à un essai de résistance à l'incendie, qui consiste essentiellement à :
- brancher le tuyau flexible recouvert du revêtement conforme à l'invention sur un circuit véhiculant le fluide (notamment constitué par de l'eau),
- soumettre le circuit à une pression intérieure statique de 200 bars, sans circulation du fluide,
- monter le tuyau flexible en U au-dessus d'un récipient contenant de l'huile combustible développant une température de 850°C de telle façon que la distance entre la surface de l'huile et le point le plus bas du flexible est égale à 30 cm,
- détecter les températures dans des positions critiques à l'aide de thermocouples, en particulier la température Te à l'extérieur du revêtement (sur le point le plus bas du U et sur les côtés verticaux du U) et la température Ti à l'intérieur entre le tuyau et son revêtement.

Pour le premier prototype on a obtenu une température Ti = 300°C et un tuyau a supporté pendant toute la durée de l'essai (quelques minutes) la pression de 200 bars.

Ensuite, le tuyau a été soumis à un contrôle visant à établir la capacité de tenue à la pression après avoir subi l'action du feu ainsi que la pression d'éclatement : le tuyau a pu supporter une pression de 400 bars pendant une minute et a éclaté seulement à une pression de 830 bars, qui est une valeur supérieure de 30 bars à celle imposée par le cahier des charges.

En outre, on a comparé certaines propriétés mécaniques du tube souple intérieur (sans revêtement de protection), qui est du type à base d'élastomère, après l'avoir soumis à l'essai d'incendie par rapport aux mêmes propriétés avant l'essai.

Les résultats sont résumés dans le tableau suivant :

| | Avant Tenue au feu | Après Tenue au feu |
|---|---|---|
| Dureté (Shore A) | 70 | 72 |
| Résistance à la rupture (MPa) | 12,4 | 13,4 |
| Allongement à la rupture (%) | 357 | 312 |

et montrent qu'il n'y a pas eu d'évolution significative des propriétés du tube intérieur qui, malgré une montée en température jusqu'à 300°C pendant quelques minutes, a parfaitement gardé les performances hydrostatiques.

On a soumis au même essai de résistance à l'incendie le deuxième prototype 20 qui ne diffère du premier que pour la présence d'une troisième tresse de céramique 1c et d'une deuxième couche réfractaire à base de silice et alumine 2b, les trois tresses de céramique 1a, 1b et 1c étant alternées avec les deux couches réfractaires, 2a et 2b, le tout étant recouvert également dans ce cas par un film 3 à base d'élastomère de silicone ignifugé.

L'application de ce revêtement a donné lieu à un diamètre extérieur total de 64 mm pour un même tuyau 20 x 32 mm (ce qui signifie que l'adoption de la structure minimale pour le revêtement du premier prototype permet de diminuer le diamètre extérieur total de 64 - 52 = 12 mm).

La mesure de la température Ti pour le deuxième prototype a donné la valeur Ti 100°C, cette solution étant donc avantageuse lorsque les fluides à véhiculer sont sensible à la température et ne supporteraient pas une montée de celle-ci jusqu'à 300°C, valeur qui est atteinte avec le premier prototype.

Bien entendu, ce dernier peut être adopté toutes les fois que les contraintes de températures ne sont pas très strictes.

On a également soumis les deux prototypes à des essais visant à mesurer la variation de raideur dynamique du tuyau équipé du revêtement selon l'invention par rapport au tuyau dépourvu de ce revêtement et dans chaque cas on a pu vérifier que cette variation ne dépasse pas dans certaines conditions d'essai la valeur de 10 dB, ce qui est une performance parfaitement acceptable dans ce genre d'application.

A toutes fins utiles, il y a lieu de rappeler ici essentiellement que les mesures de raideur dynamique s'effectuent sur le tuyau disposé en U avec un rayon de cintrage minimal et une longueur définis par les spécifications d'essai : une extrémité du U est fixe, alors que l'autre extrémité est libre et est soumise à l'action d'une force à l'aide d'un excitateur dynamique. Dans ces conditions, la raideur dynamique transmise est définie comme le rapport K de la force transmise à l'extrémité fixe sur le déplacement de l'extrémité libre.

Bien entendu, il existe 6 coefficients K correspondant aux 3 déplacements et aux 3 rotations possibles de l'extrémité libre du U. Ces coefficients dépendent de la fréquence des déplacements (linéaires ou angulaires) imposés dans une bande de fréquences comprises par exemple entre 10 HZ et 5 000 HZ. La raison K est mesurée en dB, à savoir comme 20 log K.

On a ainsi réalisé un revêtement de protection dont les performances exceptionnelles sont dues au fait que l'on utilise les propriétés isolantes thermiques exceptionnelles de l'air lorsque l'on évite les mouvements de convection de celui-ci, ce qui est obtenu justement en fractionnant l'épaisseur du revêtement en compartiments annulaires minces emprisonnant l'air et délimités chacun vers l'extérieur à l'aide d'une barrière pour l'air qui y est contenu.

**Revendications**

1. Revêtement de protection contre l'incendie pour structure allongée, telle que tuyaux, câbles électriques ou optiques, canalisations pneumatiques ou hydrauliques, comportant, une couche comprenant un matériau non organique en céramique ayant une structure appropriée pour emprisonner de l'air, une couche étanche à l'air et une couche externe étanche à l'air, caractérisé en ce qu'il comporte, en outre, au moins une deuxième couche comprenant un matériau non organique en céramique ayant une structure appropriée pour emprisonner de l'air, en ce qu'une couche étanche à l'air est disposée entre les couches comprenant un matériau non organique en céramique ayant une structure appropriée pour emprisonner de l'air, en ce que les couches étanches à l'air évitent le mouvement de connexion de l'air entre les couches, et en ce que chaque couche appropriée à emprisonner de l'air emprisonne de l'air et est constituée par une couche textile, notamment à base de tresse, tissu, tricot ou nappe textile.

2. Revêtement de protection selon la revendication 1, caractérisé en ce qu'il comporte une pluralité d'alternances de couches successives, chaque alternance comprenant une couche comportant un matériau non organique ayant une structure appropriée pour emprisonner de l'air et une couche étanche à l'air.

3. Revêtement de protection selon la revendication 1 ou 2, caractérisé en ce que chaque couche faisant barrière pour l'air est constituée par un film à base d'élastomère de silicone ignifugé, dont est enduite la surface externe des couches emprisonnant de l'air.

4. Revêtement de protection selon l'une quelconque des revendications 1 ou 2, caractérisé en ce que chaque couche faisant barrière pour l'air est constituée par une couche bi-composite dont la couche la plus interne est réalisée à base de silice et alumine, alors que la couche la plus externe est réalisée en un film à base d'élastomère de silicone ignifugé.

5. Revêtement de protection selon l'une quelconque des revendications 1 ou 2, caractérisé en ce que chacune des couches faisant barrière interne pour l'air est constituée par une couche bi-composite dont la couche la plus interne est réalisée à base de silice et alumine, alors que la couche la plus externe est réalisée en un film à base d'élastomère de silicone ignifugé, alors que la couche externe étanche à l'air est constituée par un film à base d'élastomère de silicone ignifugé.

6. Revêtement de protection selon l'une quelconque des revendications 1 ou 2, caractérisé en ce que les barrières internes pour l'air sont uniquement réalisées à base de silice et alumine, alors que la couche externe étanche à l'air est réalisée en un film à base d'élastomère de silicone ignifugé.

7. Structure allongée, telle que tuyau, câble électrique ou optique, canalisation pneumatique ou hydraulique, caractérisée en ce qu'elle est équipée d'un revêtement de protection selon l'une quelconque des revendications 1 à 6.

## Patentansprüche

1. Schutzumhüllung gegen Brand für längliche Gebilde wie Schläuche, elektrische oder optische Kabel oder pneumatische oder hydraulische Leitungen mit einer Schicht aus einem anorganischen, keramischen Material mit einer zum Einschluß von Luft ausgelegten Struktur, einer luftdichten Schicht und einer äußeren luftdichten Schicht, **dadurch gekennzeichnet**, daß sie weiterhin wenigstens zwei Schichten aus einem anorganischen, keramischen Material mit einer zum Einschluß von Luft ausgelegten Struktur aufweist, daß eine luftdichte Schicht zwischen den Schichten aus einem anorganischen, keramischen Material mit einer zum Einschließen von Luft ausgelegten Struktur angeordnet ist, daß die luftdichten Schichten den Durchlaß von Luft zwischen den Schichten unterbinden und daß jede zum Einschließen von Luft ausgelegte Schicht Luft einschließt und durch eine Textilschicht, insbesondere auf der Basis eines Geflechtes, Gewebes, Trikots oder eines Textilvlieses gebildet ist.

2. Schutzumhüllung nach Anspruch 1, dadurch gekennzeichnet, daß sie eine alternierende Vielzahl von aufeinanderfolgenden Schichten aufweist, wobei jede Alternierung eine Schicht aus einem anorganischen Material mit einer zum Einschließen von Luft ausgelegten Struktur und eine luftdichte Schicht aufweist.

3. Schutzumhüllung nach Anspruch 1 oder 2, dadurch gekennzeichnet, daß jede als Barriere für Luft dienende Schicht durch einen Überzug auf der Basis eines feuerfesten Silikonelastomers gebildet ist, der die Außenfläche der lufteinschließenden Schichten überzieht.

4. Schutzumhüllung nach einem der Ansprüche 1 oder 2, dadurch gekennzeichnet, daß jede als Barriere für Luft dienende Schicht durch eine Zwei-Komponenten- Schicht gebildet ist, deren innerste Schicht auf der Basis von Siliziumoxid und Aluminiumoxid hergestellt ist, während die äußerste Schicht aus einem Überzug auf der Basis eines feuerfesten Silikonelastomers gebildet ist.

5. Schutzumhüllung nach einem der Ansprüche 1 oder 2, dadurch gekennzeichnet, daß jede als innere Barriere für Luft dienende Schicht durch eine Zwei-Komponenten-Schicht gebildet ist, wobei die innerste Schicht auf der Basis von Siliziumoxid und Aluminiumoxid gefertigt ist, während die äußerste Schicht aus einem Überzug auf der Basis eines feuerfesten Silikonelastomers gebildet ist, während die äußere luftdichte Schicht durch einen Überzug auf der Basis eines feuerfesten Silikonelastomers vorgesehen ist.

6. Schutzumhüllung nach einem der Ansprüche 1 oder 2, dadurch gekennzeichnet, daß die inneren Barrieren für Luft einzig auf der Basis von Siliziumoxid und Aluminiumoxid hergestellt sind, während die äußere luftdichte Schicht aus einem Überzug auf der Basis eines feuerfesten Silikonelastomers vorgesehen ist.

7. Längliches Gebilde wie ein Schlauch, ein elektrisches oder optisches Kabel oder eine pneumatische oder hydraulische Leitung, dadurch gekennzeichnet, daß es mit einer Schutzumhüllung nach einem der Ansprüche 1 bis 6 versehen ist.

## Claims

1. A covering for protection against fire, for an elongate structure such as a pipe, electrical or optical cable, pneumatic or hydraulic ducting, comprising a layer consisting of a non-organic ceramic material having a structure suitable for trapping air, an air-proof layer and an outer layer which is air-proof, characterised in that it further comprises at least a second layer comprising a non-organic ceramic material having a structure adapted for trapping air, in that an air-proof layer is disposed between the layers comprising a non-organic ceramic material of a structure adapted to trap air, in that the air-proof layers avoiding the movement of connecting air between the layers and in that the said layer which is suitable for trapping air and which is captive of air is constituted by a textile layer, particularly one which is based on a braid, woven fabric, knitted fabric or textile fabric.

2. A protective covering according to Claim 1, characterised in that it comprises a plurality of alternating and successive layers, each alternation comprising a layer consisting of a non-organic material of a structure suitable for trapping air and an air-proof layer.

3. A protective covering according to Claim 1 or 2, characterised in that each layer which forms a barrier to air is constituted by a film based on a fireproof silicone elastomer with which the outside surface of the air trapping layers is coated.

4. A protective covering according to either of Claims 1 or 2, characterised in that each layer which forms a barrier to air is constituted by a bicomposite layer of which the innermost layer is constructed on a basis of silica and alumina while the outermost layer is produced as a film based on fireproof silicone elastomer.

5. A protective covering according to either of Claims 1 or 2, characterised in that each of the layers which forms an inner barrier to air is constituted by a bicomposite layer of which the innermost layer is based on silica and alumina, while the outermost layer is a film based on fireproof silicone elastomer, while the outer layer which is impervious to air consists of a film based on a fireproof silicone elastomer.

6. A protective covering according to either of Claims 1 or 2, characterised in that the inner barriers to air are solely produced on a basis of silica and alumina while the outer layer which is impervious to air is produced from a film based on fireproof silicone elastomer.

7. An elongate structure such as a pipe, electrical or optical cable, pneumatic or hydraulic ducting, characterised in that it is equipped with a protective covering according to any one of Claims 1 to 6.

FIG.1

FIG.2